# EUROPEAN PATENT SPECIFICATION

(11) **EP 2 949 567 B1**
(45) Date of publication and mention of the grant of the patent: **04.12.2019**
(21) Application number: 14170603.6
(22) Date of filing: 30.05.2014
(51) Int. Cl.: B62M 7/04, B62J 17/00, B62J 23/00, B62J 25/00, B62K 11/04

(54) **Straddle type vehicle with single cylinder engine**
Grätschsitzfahrzeug mit Einzylindermotor
Véhicule de type à enfourcher avec moteur à cylindre unique

(43) Date of publication of application: 02.12.2015
(73) Proprietor: YAMAHA MOTOR CO., LTD., Iwata-shi Shizuoka 438-8501 (JP)
(72) Inventor: Giacobbe, Davide, Iwata, Shizuoka 438-8501 (JP)
(74) Representative: Grünecker Patent- und Rechtsanwälte PartG mbB

(56) References cited:
- EP-A1- 2 540 605
- JP-A- H0 585 444
- JP-A- H08 253 185
- JP-A- 2006 027 397
- US-B1- 6 360 839

## Description

The present invention relates to a straddle type vehicle with a single cylinder engine that is fixed to a vehicle frame.

Prior art document JP 2006-27397 A, which is considered as the closest prior art, discloses a straddle type vehicle with a single cylinder engine fixed to a vehicle frame, a seat for a rider supported at the vehicle frame, a pair of footrests for the rider attached to the vehicle frame, and a front wheel. Said single cylinder engine comprises a crankcase accommodating a crank mechanism, a cylinder block having a single cylinder bore accommodating a piston connected with the crank mechanism, a cylinder head arranged at an end of the cylinder block. An end of the cylinder block is arranged at a part of the crank case. Said cylinder block and said cylinder head are partially exposed to the out side of the vehicle. The crank case comprises a side cover lid attached to the crank case to constitute an outermost portion of the crank case in width direction of the vehicle, said side cover lid is exposed to the out side. A cover means comprises a cover portion arranged under said side cover lid, said cover portion comprises a side sections that extends in a downward direction to cover a space under the crank case and intersects an imaginary plan that contains a road contact point of the front wheel and outermost portions of the footrests in width direction of the vehicle. The cover means comprises a cover section arranged in width direction of the vehicle and connecting the side sections. Said cover section intersects the imaginary plan that contains the road contact point of the front wheel and outermost portions of the footrests in width direction of the vehicle.

Prior art document EP 2 540 605 A discloses a straddle type vehicle with a single cylinder engine fixed to a vehicle frame, a seat for a rider supported at the vehicle frame, a pair of footrests for the rider attached to the vehicle frame, and a front wheel. Said single cylinder engine comprises a crankcase accommodating a crank mechanism, a cylinder block having a single cylinder bore accommodating a piston connected with the crank mechanism, a cylinder head arranged at a top end of the cylinder block. A bottom end of the cylinder block is arranged at an upper part of the crank case. Said cylinder block and said cylinder head are partially exposed to the out side of the vehicle. The crank case comprises an outermost portion of the crank case in width direction of the vehicle, and exposed to the out side. A cover means comprises a first cover portion arranged under said outermost portion of the crank case. Said first cover portion comprises a side section that extends in a downward direction to cover a space under the crank case and intersects an imaginary plan that contains a road contact point of the front wheel and outermost portions of the footrests in width direction of the vehicle. The crank case comprises a second outermost portion of the crank case in width direction of the vehicle, and partially exposed to the out side. The cover means comprises a second cover portion arranged under said second outermost portion of the crank case. Said second cover portion comprises a side section that extends in a downward direction to cover the space under the crank case and intersects the imaginary plan that contains the road contact point of the front wheel and outermost portions of the footrests in width direction of the vehicle. The first and second cover portions arranged to be connected in width direction of the vehicle.

The prior art document EP 2 226 241 A1 discloses a straddle type vehicle with a single cylinder engine fixed to a vehicle frame, a seat for a rider supported at the vehicle frame, a pair of footrests for the rider attached to the vehicle frame, and a front wheel. Said single cylinder engine comprises a crankcase accommodating a crank mechanism, a cylinder block having a single cylinder bore accommodating a piston connected with the crank mechanism, a cylinder head arranged at a top end of the cylinder block. A bottom end of the cylinder block is arranged at an upper part of the crank case. Said cylinder block and said cylinder head are exposed to the out side of the vehicle. The crank case comprises a side cover lid attached to the crank case to constitute an outermost portion of the crank case in width direction of the vehicle, said first side cover lid is exposed to the out side. Such a straddle type vehicle can be called a small size motorcycle that uses a small size engine in view of economical reasons or requirement on the respective drivers license. In case of economical reasons for the single cylinder engine the related straddle type vehicle may have the engine at least partly exposed to the outside so that no cover means are used. Such a kind of straddle type vehicle is also called "naked bike". In addition to the economical reasons, it may be also decided to have the engine exposed in order to have few on technical equipment of the vehicle.

However, on such a specific type of straddle type vehicle, the driver is also "exposed" to the environment and it might be uncomfortable for the driver, especially when driving in the rain or the like. When comparing a naked bike with a single cylinder engine with a comparable naked bike having a multi-cylinder engine, it is to be noted that a multi-cylinder engine having the cylinders arranged in width direction of the vehicle provides a cylinder block and a related crank case much broader than the cylinder block and the crank case of the single cylinder engine so that such multi-cylinder engine provides additional protection for the driver also without specific cover means. Accordingly, there is specific need for improvement of a straddle type vehicle with a single cylinder engine so that comfort for the driver is improved without changing the character of the straddle type vehicle having a single cylinder engine with the cylinder block and/or the cylinder head being at least partly exposed to the outside of the vehicle.

Hence, it is the object of the present invention to provide a straddle type vehicle with a single cylinder engine fixed to a vehicle frame and provided with a cylinder block and/or a cylinder head which are at least partly exposed to the outside of the vehicle with high driving comfort for the rider.

According to the present invention, that object is solved by a straddle type vehicle with a single cylinder engine fixed to the vehicle frame having the features of independent claim 1. Preferred embodiments are laid down in the dependent claims.

Accordingly, it is provided a straddle type vehicle with a single cylinder engine fixed to a vehicle frame, a seat for a rider supported at the vehicle frame, a pair of footrests for the rider attached to the vehicle frame, and at least one front wheel, said single cylinder engine comprises:
a crankcase accommodating a crank mechanism,
a cylinder block having a single cylinder bore accommodating a piston connected with the crank mechanism,
a cylinder head arranged at a top end of the cylinder block, and a bottom end of the cylinder block is arranged at an upper part of the crank case, said cylinder block and/or said cylinder head are at least partially exposed to the out side of the vehicle, wherein
the crank case comprises a first side cover lid attached to the crank case to constitute an outermost portion of the crank case in width direction of the vehicle, said first side cover lid is exposed to the out side, and a cover means comprises at least a first cover portion arranged under said first side cover lid, said first cover portion comprises a first side section that extends in a downward direction to cover a space under the crank case and intersects an imaginary plan that contains a road contact point of the front wheel and outermost portions of the footrests in width direction of the vehicle. The side section of the cover portion intersects the said imaginary plan so that the cover blocks muddy water splashed from the front wheel in direction to the feet of the rider and the muddy water is not splashed to the feet of the rider. Accordingly, comfort of the rider can be improved while general character of the straddle type vehicle, especially the character of a naked bike can be maintained even if a single cylinder engine, especially a small size single cylinder engine is provided.

Preferably, in such straddle type vehicle with a single cylinder engine, said first cover portion comprises an outermost portion in width direction of the vehicle and said outermost portion of the first cover portion is provided further outward from said first side cover lid in width direction of the vehicle, preferably said outermost portion of the first cover portion is arranged at said first side section arranged under said first side cover lid. Accordingly, protection performance of the cover means is further improved and splashing of mud water to the rider's feet is further suppressed.

Preferably, in such straddle type vehicle with a single cylinder engine, the pair of footrests comprises a first footrest on the same side as the first cover portion, the outermost portion of the first cover portion is provided further inward from the outermost portion of the first footrest. With said arrangement, excessive size in width direction of the vehicle can be prevented but still securing sufficient protection of the rider's feet.

Preferably, in such straddle type vehicle with a single cylinder engine, a clutch mechanism is arranged within a clutch case and connected with the crank mechanism, said first side cover lid is attached to the clutch case and covers the clutch mechanism, said clutch case is attached to a crank case portion or integral with the crank case. The cover means, especially the cover portion is arranged under the first side cover lid embodied as a clutch cover lid wherein said lid is still exposed and can be easily reached for maintenance action.

In such straddle type vehicle with a single cylinder engine, still according to claim 1, the crank case comprises a second side cover lid attached to the crank case to constitute an outermost portion of the crank case in width direction of the vehicle, said second side cover lid is exposed to the out side, and the cover means comprises at least a second cover portion arranged under said second side cover lid, said second cover portion comprises a second side section that extends in a downward direction to cover the space under the crank case and intersects the imaginary plan that contains the road contact point of the front wheel and outermost portions of the footrests in width direction of the vehicle, wherein the first side cover lid and the second side cover lid are exposed to opposing out side of the vehicle and constitutes outermost portions of the crank case in width direction of the vehicle. With the arrangement on a second side comparable with the arrangement of the first side equal effect concerning both feet of the rider can be easily achieved, especially in case no further or alternative protection is provided on one side. Such alternative protection of a driver's foot may be provided by means of an engine cooling device or exhaust gas pipe device being arranged on one side of the vehicle only.

Preferably, in such straddle type vehicle with a single cylinder engine, said second cover portion comprises an outermost portion in width direction of the vehicle and said outermost portion of the second cover portion is provided further outward from said second side cover lid in width direction of the vehicle, preferably ,said outermost portion of the second cover portion is arranged at said second side section arranged under said second side cover lid. With such an arrangement, similar protection can be secured for both feet of the rider.

Preferably, in such straddle type vehicle with a single cylinder engine, the pair of footrests comprises a second footrest on the same side as the second cover portion, the outermost portion of the second cover portion is provided further inward from the outermost portion of the second footrest. With such a specific arrangement, excessive size in width direction of the vehicle can be prevented.

Preferably, in such straddle type vehicle with a single cylinder engine, a generator mechanism is arranged within a generator case and connected with the with the crank mechanism, said second side cover lid is attached to the generator case and covers said generator mechanism, said generator case is attached to a crank case portion or integral with the crank case. Similar with the embodiment provided with a clutch cover lid, the lid to cover a generator mechanism is provided at the opposing side in order to have the generator mechanism easily reachable for maintenance action but still provide protection performance for the rider's feet.

In such straddle type vehicle with a single cylinder engine, still according to claim 1, the cover means comprises a third cover portion arranged in width direction of the vehicle and connecting the first and second cover portions, said third cover portion intersects the imaginary plan that contains the road contact point of the front wheel and outermost portions of the footrests in width direction of the vehicle. With the arrangement of the third cover portion between the first and second cover portions, the engine and the crank case can be protected in addition to the protection of the rider's feet.

In such straddle type vehicle with a single cylinder engine, still according to claim 1, front end sections of the first and second cover portions are extending further forward of the vehicle than a central section of said third cover portion. Additional space in front of the crank case can be covered in order to have a protected space for further equipment.

Preferably, in such straddle type vehicle with a single cylinder engine, the first to third cover portions are parts of an air/water guide means that is adapted to guide air/water splashed from the front wheel. Said air/water guide means can catch the muddy water so that said muddy water may not flow over the further parts of the cover means.

Preferably, in such straddle type vehicle with a single cylinder engine, said third cover portion comprises a front opening that faces the front wheel and intersects the imaginary plan that contains the road contact point of the front wheel and outermost portions of the footrests in width direction of the vehicle. The front opening that faces the front wheel can directly catch the water splashed from the front wheel.

Preferably, in such straddle type vehicle with a single cylinder engine, said imaginary plan that contains the road contact point of the front wheel and outermost portions of the footrests in width direction of the vehicle intersects the front opening at a lower part thereof. With such an arrangement, water splashed from the front wheel to the vehicle above said imaginary plan is directly caught by the opening and the water splashed by the front wheel in direction to the vehicle under said imaginary plan is simply blocked by the configuration of the side cover means.

Preferably, in such straddle type vehicle with a single cylinder engine, said front opening is a further part of the air/water guide means, said air/water guide means is adapted to guide air/water splashed from the front wheel toward the area of the footrests to said space under the crank case. Said specific air/water guide means can guide the mud water in a suitable manner even if much water is splashed to the vehicle, especially when driving during heavy rain.

Preferably, in such straddle type vehicle with a single cylinder engine said vehicle comprises an exhaust pipe means arranged to extend from the engine through the space under the crank case to the rear of the vehicle, side section of first cover portion extends in downward direction to a lowest end that is located lower than an exhaust pipe of the exhaust pipe means that is arranged under the crank case. Accordingly, the exhaust pipe under the crank case constitutes the lowest part of the exhaust pipe means is protected by the side cover means.

Preferably, in such straddle type vehicle with a single cylinder engine, the cover means comprises at least one protruding section, preferably protruding in width direction of the vehicle. The protruding section ensures bending strength of the cover means, especially in case of large size of the respective cover portions.

Hereinafter, the present invention is illustrated and explained by means of a preferred embodiment in conjunction with the accompanying drawings. The drawings wherein:
- Figure 1: is a first side view of the straddle type vehicle, especially the view of the right side of the vehicle;
- Figure 2: is a second side view of the straddle type vehicle according to the preferred embodiment, especially the left side view of the vehicle;
- Figure 3a: is a front view of the vehicle;
- Figure 3b: is a sectional front view of the vehicle according to A-A in Figure 1;
- Figure 4: is a bottom view of the vehicle; and
- Figure 5: is an explosive view of details of the preferred embodiment.

The preferred embodiment of the straddle type vehicle with a single cylinder engine is a motorcycle with a single front wheel 4 and a single rear wheel 20. The front wheel is supported by a front fork 22 and a handle bar 23 is connected to said front fork 22. The front fork 22 is supported at the vehicle frame 10 by means of a head type 24.

The engine 1 is fixed the vehicle frame 10. Said engine 1 is provided with a single cylinder arranged in a substantially upright position and slightly inclined in forward direction of the vehicle. In particular, the single cylinder engine 1 comprises a crank case 5 that accommodates a crank mechanism that is not illustrated in detail. A cylinder block 6 having a single cylinder bore (not shown) accommodating a piston (not shown) that is connected with the crank mechanism. Said cylinder block 6 is attached to an upper surface of the crank case 5 with a bottom end thereof. A cylinder head 7 is arranged at a top end of the cylinder block 6.

According to the preferred embodiment, the cylinder block 6 is completely exposed, especially the to front of the vehicle and to both sides of the vehicle. The cylinder head 7 is also exposed to the front side and both sides of the vehicle even if a small section at the rear of the cylinder head is covered by a side element. Said vehicle is provided with an exhaust pipe means 15.

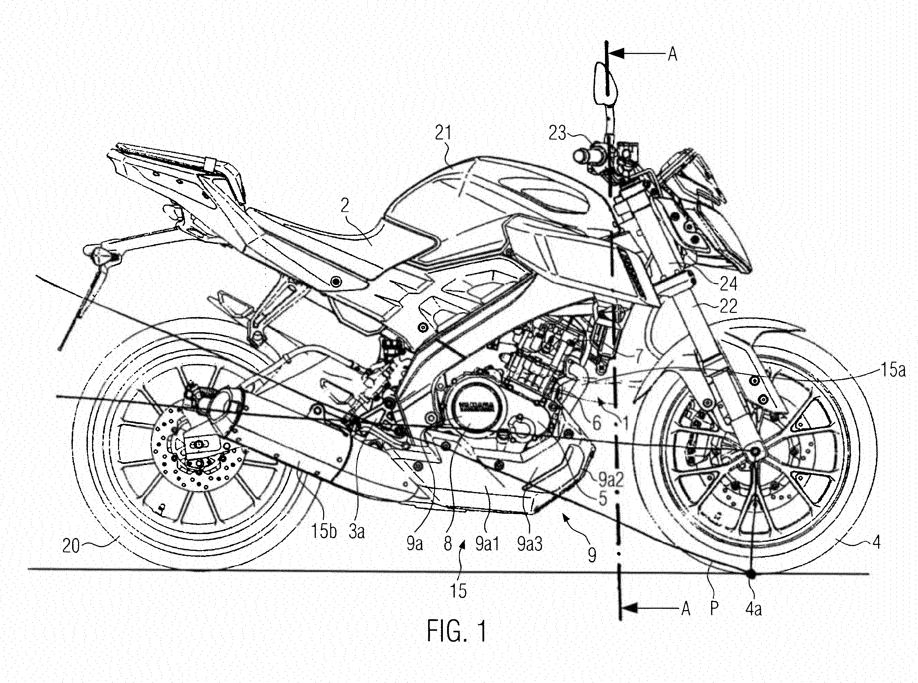

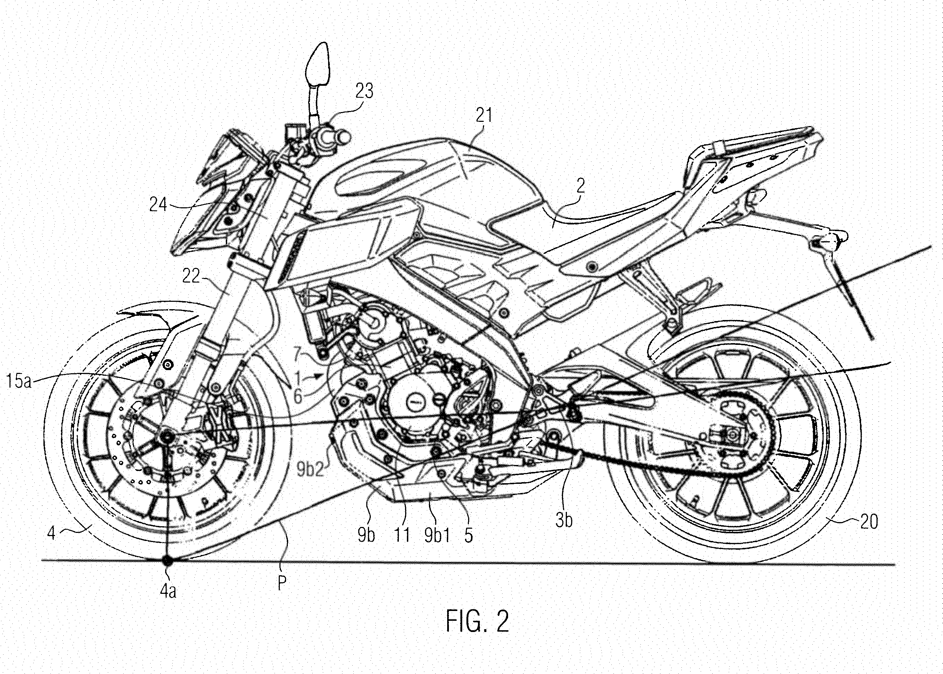

An exhaust pipe 15a of said exhaust pipe means 15 is connected with the engine 1 and extends in front of the cylinder block 6 in downward direction, than further in front of the crank case 5 and following under the crank case 5. Said exhaust pipe 15a is connected to a muffler of exhaust pipe means 15. An upper part of the exhaust pipe (exhaust pipe in front of the cylinder head 7 and cylinder block 6) is exposed to the out side as can be seen in Figure 1 and 2. In the embodiment the muffler 15b is arranged on the right side of the vehicle and extends to the rear in slightly upward direction as can be taken from Figure 1.

The term "exposed to the outside" indicates that no specific cover means is arranged to cover the respective element. Said term does not refer to arrangement of further technical equipment like the front wheel, the front fork, a front fender, an exhaust pipe arrangement, water cooling means or the like.

Within the preferred embodiment, the seat 2 for the rider is supported at the vehicle frame 10 and a fuel tank 21 is arranged between the seat 2 and the head pipe 24 with regards to the fore and aft direction of the vehicle. The engine 1 is arranged substantiate under the fuel tank 21 so that the engine 1 is more forward than the seat 2.

The single cylinder engine 1 comprises the crank case 5 wherein the exhaust pipe 15a extends from the cylinder head 7 downward and through the space under the crank case 5 in the rearward direction of the vehicle. A pair of footrests 3a, 3b for the rider is arranged in suitable distance under the seat 2 and behind the crank case 5.

As illustrated in Figure 1, a first side view, especially the right side view of the vehicle illustrates the crank case 5 that comprises a first side cover lid 8 attached to the crank case 5. Said first side cover lid 8 constitutes an outermost portion of the crank case 5 in width direction of the vehicle. Said first side cover lid 8 is exposed to the outside so that the same is directly reachable, especially for maintenance action. Within the preferred embodiment, said first side cover lid 8 constitutes a clutch cover lid in order to cover a clutch mechanism (not shown) of the vehicle.

Figure 2 illustrates the second side view especially the left side view of the vehicle wherein a second side cover lid 11 is shown that is exposed to the outside and constitutes the outermost portion of the crank case 5 in width direction of the vehicle. Said second cover lid 11 is also attached to the crank case 5. According to the preferred embodiment, said second side cover lid 11 is a generator cover lid to cover a generator mechanism (not shown) that is arranged within a generator case and connected with the crank mechanism. Accordingly, the first side cover lid 8 and the second side cover lid 11 constitutes the outermost portions of the crank case 5 in width direction of the vehicle.

The single cylinder engine 1 of the preferred embodiment does not require a large crank case 5 in width direction of the vehicle. Hence, the distance between the first side cover lid 8 and the second side cover lid 11 in width direction of the vehicle is relatively small so that the crank case 5 cannot cover the rider's feet placed on the footrests with regards to forward direction of the vehicle.

According to the preferred embodiment, a cover means 9 is provided such that it is arranged at a lower portion of the vehicle. Said cover means 9 is attached to the crank case 5 by means of screws and said cover means 9 covers at least a lower part of the crank case 5. Said cover means 9 is provided to cover a space under the crank case 5 and according to the preferred embodiment, the exhaust pipe extends through said cover means 9 as illustrated within the Figures 1 and 2. In particular, as can be taken from said Figures 1 and 2, the exhaust pipe extends from the cylinder head 7 in downward direction into the space covered by the cover means 9 and the muffler 15b (see Figure 1) extends out of said space in rearward direction of the vehicle.

According to the specific configuration and arrangement of the cover means 9, a first cover portion 9a, which is illustrated as a ride cover portion in Figure 1, is arranged under the first side cover lid 8 that is embodied at the clutch cover lid. Said first cover portion 9a comprises a side section 9a1 that extends in downward direction and covers the space under the crank case 5. In particular, said side section 9a1 is arranged directly under the first side cover lid 8.

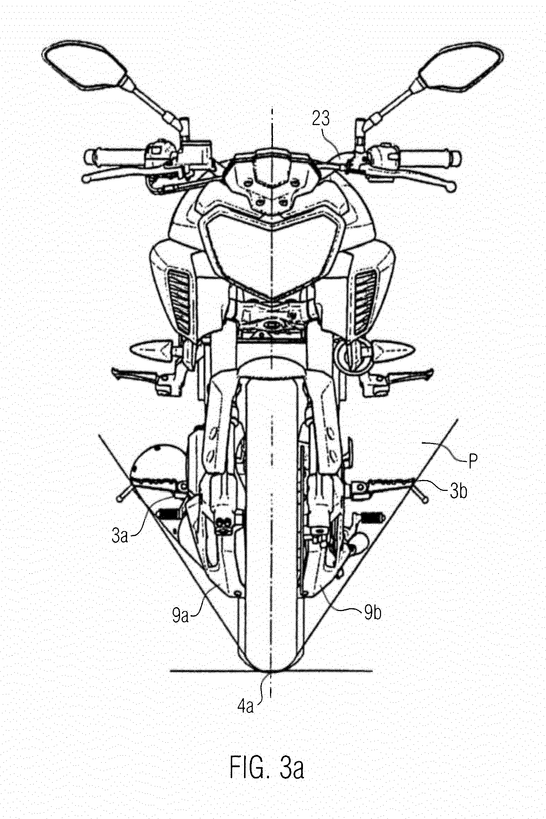

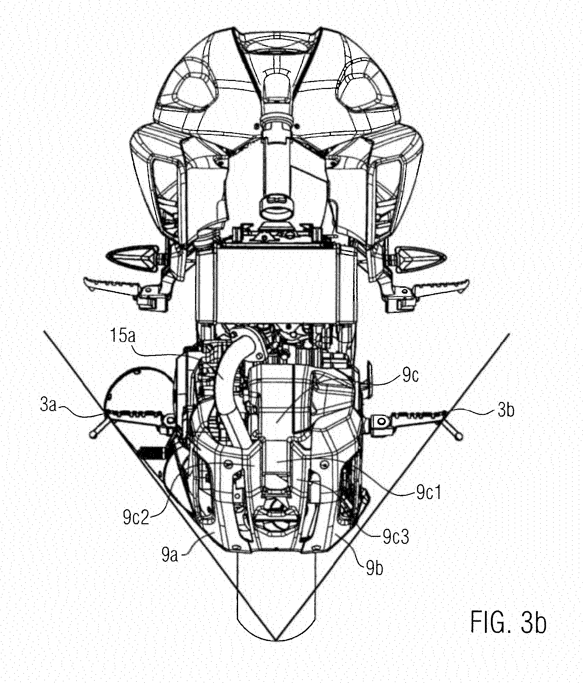

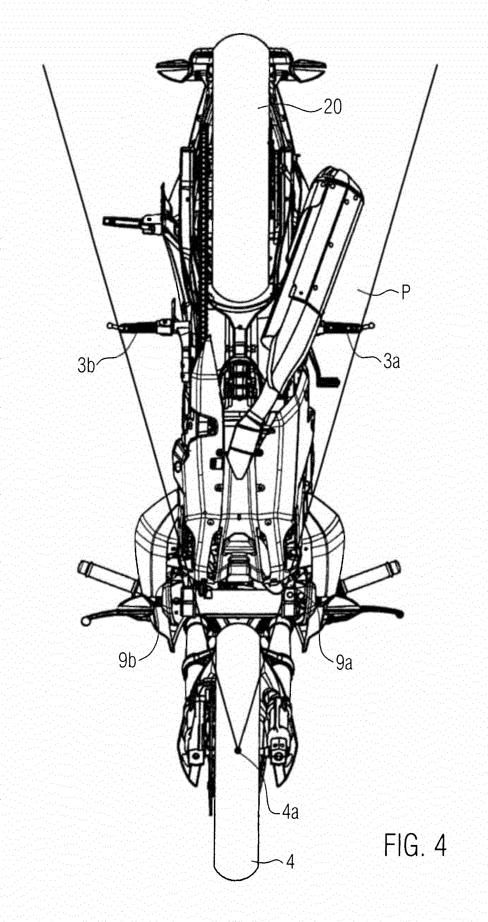

As indicated within Figure 1, there is an imaginary plan P that contains a road contact point 4a of the front wheel 4 and outermost portions of the pair of the footrests 3a, 3b in width direction of the vehicle. The arrangement of the outermost portions of the pair of the footrests 3a, 3b is illustrated in the front view of Figures 3a, 3b and the bottom view of Figure 4. Said imaginary plan P is defined by said three points and extends in width direction of the vehicle and is inclined downwardly in forward direction of the vehicle as illustrated within the Figures 1 and 2.

According to the preferred embodiment, at least the side section 9a1 that extends in downward direction to cover the space under the crank case intersects the said imaginary plan P.

In Figure 1, the right side of the vehicle of the preferred embodiment is illustrated. Comparable arrangement of a side section 9b is also provided on the left side of the vehicle illustrated within Figure 2. In particular, the cover means 9 further comprises at least a second cover section 9b arranged under the second side cover lid 11 that is embodied at a generator cover lid. Said second cover portion 9b which constitutes the left cover portion comprises the side section 9b1 that extends in downward direction to cover the space under the crank case 5. Said left side section 9b1 also intersects the imaginary plan P that contains the road contact point 4a of the front wheel 4 and outermost portion of the footrests 3a, 3b in width direction of the vehicle.

With the arrangement of the cover means 9, especially the side section 9a1 and 9b1, which extend in downward direction and intersects the imaginary plan P, protection effect for the vehicle and the rider's feet can be achieved. In particular, when driving in the rain, water is splashed by the front wheel 4 in rear direction toward the crank case 5 and the rider's feet placed on the footrests 3a, 3b. In contrast to "fresh" rain water, the splashed water may contain mud or the like so that it is uncomfortable for the rider to be splattered by said muddy water. However, with the arrangement, the side sections 9a1 and 9b1 extending in downward direction to cover the space under the crank case 5 in a manner to extend further downward so that the same would intersect the main splashing line of the mud water mud water protection means for the rider's feet is provided. With simple assumption, the main direction of splashed mud water from the front wheel 4 being critical for the rider's feet is concise with the imaginary plan P as explained above.

According to the preferred embodiment, the cover means 9 is not restricted to some kind of mud and mud water protection for the engine and crank case wherein such cover means would be directly attached close to the bottom surface of the crank case. In particular, the cover means 9 according to the preferred embodiment, especially the side sections 9a1 and 9b1 extends further downward in order to cover space under the crank case wherein said space may further accommodate further means like exhaust pipe means and all further equipment like a surge tank of a water-cooling device or equipment concerning oil cooling device.

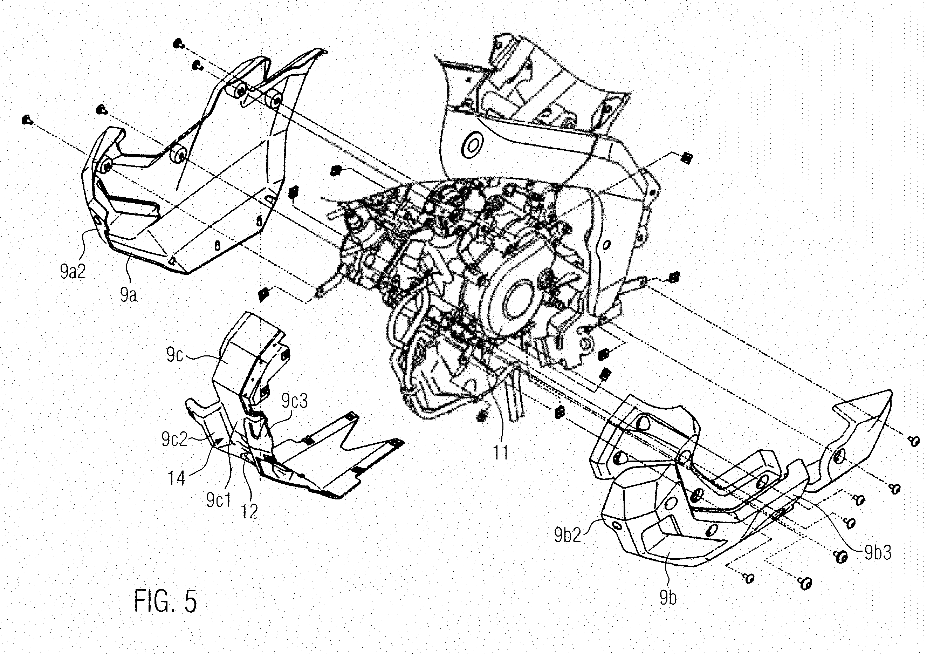

Figure 5 and Figure 3b illustrates a specific embodiment of the cover means 9 with regards to the crank case 5. The cover means 9 according to said specific embodiment is constituted by a right side cover element that constitutes the first cover portion 9a, a left side cover element that constitutes the second cover portion 9b and a third cover element that constitutes a third cover portion 9c. Said third cover portion 9c faces to the forward direction of the vehicle and is used to connect the left and right side cover portion with each other. In particular, the third cover portion 9c is arranged in width direction of the vehicle. A central part 9c1 of the third cover portion 9c provides a water protection for the engine 1 and the crank case 5 to protect same from water directly splashed from the front wheel 4 toward the engine 1 and the crank case 5. Said third cover portion 9c also intersects the imaginary plan P so that the same also catches the water splashed from the front wheel 4 towards the feet of the rider.

The third cover portion 9c is further provided with a first extension section 9c2 that is arranged on the right side of the central part 9c1 and a second extension section 9c3 that is arranged on the left side of the central part 9c1. Said first and second extension sections 9c2, 9c3 are extending in forward direction so that said extension sections and the central part provide a channel 14 which is open to the front of the vehicle and provided to catch water splashed from the front wheel 4 toward the engine 1 and a crank case 5. With said arrangement, water caught by such a channel 14 is prevented to flow in width direction of the vehicle. As can be taken from Figure 5 as well as the further Figures 1 and 2, the channel 14 constituted by the central part 9c1 and the extension sections 9c2 and 9c3 extends in downward direction and inclined in rearward direction. Accordingly, muddy water caught by said channel 14 is directly guided to an area under the crank case. The flow of muddy water that was splashed to the central part 9c2 is suppressed to flow in width direction so that same may not flow over the first and second cover portions 9a and 9b. Hence, appearance of said portions can be improved, especially when driving in the rain and muddy water may not be further splashed to the driver, especially the driver's feet.

According to the preferred embodiment, the first cover 9a comprises a first front end section 9a2 that extends further forward with regards to the crank case 5 and additionally covers space in front of the crank case 5 with regards to the side view. The second cover portion 9b comprises a front end section 9b2 which also extends in forward direction to cover space in front of the crank case 5. Said front end sections 9a2, 9b2 directly flushes with the first extension section 9c2 and the second extension section 9c3, respectively.

According to the preferred embodiment, the channel 14 constituted by the central part 9c1 and the first extension section 9c2 and the second extension section 9c3 comprises a front opening 12 which faces the front wheel 4. Said front opening 12 is basically constituted by a cut out at the central part 9c1 between the first extension section 9c2 and the second extension section 9c3. Said front opening 12 intersects the imaginary plan P so that muddy water splashed in direction of the driver's feet from the front wheel 4 forwardly direct impact into said opening 12.

According to the preferred embodiment, a bottom edge of the front opening 12 is under said imaginary plan P or directly included in said imaginary plan P so that the opening mainly extends above said imaginary plan P.

The front opening 12 is connected with a channel 14 means arranged within the space in front of the crank case 5 and under the crank case 5. Said space is covered by the cover means 9 as explained above. Accordingly, the water that has been caught by the channel 14 constituted by the central part 9c1 and a first and second extension section 9c2 is guided downward and rearward to the front opening 12 and then into the channel 14 within the cover means 9. By means of said channel 14, the water is further guided in rearward direction and flows out of the cover means 9 at a position behind the crank case 5 and toward the rear wheel 20. Hence, the muddy water that flows out at said position is less critical for the driver's feet.

According to the preferred embodiment illustrated in Figure 5, the cover means 9 is provided by a combination of three elements 9a, 9b, 9c like the right side cover element, the left side cover element and a front cover element which are connected to the vehicle by means of screws, wherein said elements are either arranged in suitable position with regard to each other or directly connected to each other. Alternatively, but not according to the invention, a cover means may be provided as a one piece element that is attached to the vehicle. Moreover, the cover means according to the preferred embodiment is provided to extend in downward direction intersecting the imaginary plan P in order to protect the driver's feet from water splashed by the front wheel 4 in rearward direction. Said protection effect can be further improved by the arrangement of the outermost portion of the first and second cover portions 9a, 9b being further outward in width direction of the vehicle that the outermost portions of the crank case 5 constituted by the first and second side cover lids 8, 12. Moreover, such protection effect can further improve in case said outermost portions of the first and second cover portion 9a, 9b intersects a line from the road contact point 4a of the front wheel 4 and a respective outermost portion of the related footrest 3a or 3b as illustrated in Figures 3a, 3b and Figure 4.

Moreover, the cover means 9 according to the preferred embodiment is made of synthetic resin, especially of fiber reinforced synthetic resin. As clearly evident from the Figures, the related portions of the cover means 9, especially the side cover portions 9a and 9b are relatively large in size so that reinforcing structure is provided by means of protruding sections 9a3, 9b3. Said protruding sections are arranged to partly surround the related side cover lid.

The embodiment discloses a straddle type vehicle with the single cylinder engine 1 fixed to the vehicle frame 10. The seat 2 for a rider is supported at the vehicle frame 10. The pair of footrests 3a,3b for the rider is attached to the vehicle frame 10. The Vehicle comprises at least one front wheel 4. The single cylinder engine 1 comprises a crankcase 5 accommodating a crank mechanism, a cylinder block 6 having a single cylinder bore accommodating a piston connected with the crank mechanism, and a cylinder head 7 arranged at a top end of the cylinder block 6. The bottom end of the cylinder block 6 is arranged at an upper part of the crank case 5: The cylinder block 6 and/or said cylinder head 7 are at least partially exposed to the out side of the vehicle. The crank case 5 comprises a first side cover lid 8 attached to the crank case 5 to constitute an outermost portion of the crank case 5 in width direction of the vehicle. Said first side cover lid 8 is exposed to the out side. A cover means 9 comprises at least a first cover portion 9a arranged under said first side cover lid 8. Said first cover portion 9a comprises a side section 9a1 that extends in a downward direction to cover a space under the crank case 5. Said side section 9a1 intersects an imaginary plan P that contains a road contact point 4a of the front wheel 4 and outermost portions of the footrests 3a,3b in width direction of the vehicle.

In the straddle type vehicle according to the preferred embodiment, said first cover portion 9a comprises an outermost portion in width direction of the vehicle. Said outermost portion of the first cover portion 9a is provided further outward from said first side cover lid 8 in width direction of the vehicle. Said outermost portion of the first cover portion 9a is arranged at said first side section 9a1 arranged under said first side cover lid 8.

In the straddle type vehicle according to the preferred embodiment, the pair of footrests 3a,3b comprises a first footrest 3a on the same side as the first cover portion 9a. The outermost portion of the first cover portion 9a is provided further inward from the outermost portion of the first footrest 3a.

In the straddle type vehicle according to the preferred embodiment, a clutch mechanism is arranged within a clutch case and connected with the crank mechanism. Said first side cover lid 8 is attached to the clutch case and covers the clutch mechanism. Said clutch case is attached to a crank case portion or integral with the crank case.

In the straddle type vehicle according to the preferred embodiment, the crank case 5 comprises a second side cover lid 11 attached to the crank case 5 to constitute an outermost portion of the crank case 5 in width direction of the vehicle. Said second side cover lid 11 is exposed to the out side. The cover means 9 comprises at least a second cover portion 9b arranged under said second side cover lid 11. Said second cover portion 9b comprises a side section 9b1 that extends in a downward direction to cover the space under the crank case 5. The side section 9b1 intersects the imaginary plan P that contains the road contact point 4a of the front wheel 4 and outermost portions of the footrests 3a,3b in width direction of the vehicle. The first side cover lid 8 and the second side cover lid 11 are exposed to opposing out side of the vehicle and constitutes outermost portions of the crank case 5 in width direction of the vehicle.

In the straddle type vehicle according to the preferred embodiment, said second cover portion 9b comprises an outermost portion in width direction of the vehicle. Said outermost portion of the second cover portion 9b is provided further outward from said second side cover lid 11 in width direction of the vehicle. Said outermost portion of the second cover portion 9b is arranged at said second side section 9b1 arranged under said second side cover lid 11.

In the straddle type vehicle according to the preferred embodiment, the pair of footrests 3a,3b comprises a second footrest 3b on the same side as the second cover portion 9b. The outermost portion of the second cover portion 9a is provided further inward from the outermost portion of the second footrest 3a.

In the straddle type vehicle according to the preferred embodiment, a generator mechanism is arranged within a generator case and connected with the with the crank mechanism. Said second side cover lid 11 is attached to the generator case and covers said generator mechanism. Said generator case is attached to a crank case portion or integral with the crank case.

In the straddle type vehicle according to the preferred embodiment, the cover means 9 comprises a third cover portion 9c arranged in width direction of the vehicle and connecting the first and second cover portions 9a, 9b. Said third cover portion 9c intersects the imaginary plan P that contains the road contact point 4a of the front wheel 4 and outermost portions of the footrests 3a,3b in width direction of the vehicle.

In the straddle type vehicle according to the preferred embodiment, front end sections 9a2, 9b2 of the first and second cover portions 9a, 9b are extending further forward of the vehicle than a central section 9c1 of said third cover portion 9c.

In the straddle type vehicle according to the preferred embodiment, the first to third cover portions 9a, 9b, 9c are parts of an air/water guide means that is adapted to guide air/water splashed from the front wheel 4.

In the straddle type vehicle according to the preferred embodiment, said third cover portion 9c comprises a front opening 12 that faces the front wheel 4 and intersects the imaginary plan P that contains the road contact point 4a of the front wheel 4 and outermost portions of the footrests 3a,3b in width direction of the vehicle. Said imaginary plan P that contains the road contact point 4a of the front wheel 4 and outermost portions of the footrests 3a,3b in width direction of the vehicle intersects the front opening 12 at a lower part thereof.

In the straddle type vehicle according to the preferred embodiment, said front opening 12 is a further part of the air/water guide means. Said air/water guide means is adapted to guide air/water splashed from the front wheel 4 toward the area of the footrests 3a,3b to said space under the crank case 5.

In the straddle type vehicle according to the preferred embodiment, the cover means 9 comprises at least one protruding section 9a3, 9b3. Said section is protruding in width direction of the vehicle.

In the straddle type vehicle according to the preferred embodiment, said vehicle comprises an exhaust pipe means arranged to extend from the engine 1 through the space under the crank case 5 to the rear of the vehicle. The side section 9a1 of first cover portion 9a and according to the embodiment the side section 9b1 of second cover portion 9b extends in downward direction to a lowest end that is located lower than the exhaust pipe of the exhaust pipe means 15 that is arranged under the crank case 5, as can be seen in the side views of Figures 1 and 2. Accordingly, the exhaust pipe at the lowest point is protected.

According to the teaching of the embodiment it is provided a straddle type vehicle with a single cylinder engine and a cover means 9 with at least one cover portion 9a,9b arranged under a side cover lid 8,11, said cover portion 9a,9b comprises a side section 9a1,9b1 that extends in a downward direction to cover a space under the crank case 5 and intersects an imaginary plan P that contains a road contact point 4a of the front wheel 4 and outermost portions of the footrests 3a,3b in width direction of the vehicle.

## Claims

1. Straddle type vehicle with a single cylinder engine (1) fixed to a vehicle frame (10), a seat (2) for a rider supported at the vehicle frame, a pair of footrests (3a,3b) for the rider attached to the vehicle frame (10), and at least one front wheel (4),
said single cylinder engine (1) comprises:
a crankcase (5) accommodating a crank mechanism,
a cylinder block (6) having a single cylinder bore accommodating a piston connected with the crank mechanism,
a cylinder head (7) arranged at a top end of the cylinder block (6), and a bottom end of the cylinder block (6) is arranged at an upper part of the crank case (5), said cylinder block (6) and/or said cylinder head (7) are at least partially exposed to the outside of the vehicle, wherein
the crank case (5) comprises a first side cover lid (8) attached to the crank case (5) to constitute an outermost portion of the crank case (5) in width direction of the vehicle, said first side cover lid (8) is exposed to the outside, wherein a cover means (9) comprises at least a first cover portion (9a) arranged under said first side cover lid (8), said first cover portion (9a) comprises a side section (9a1) that extends in a downward direction to cover a space under the crank case (5) and intersects an imaginary plan (P) that contains a road contact point (4a) of the front wheel (4) and outermost portions of the footrests (3a,3b) in width direction of the vehicle, and
the crank case (5) comprises a second side cover lid (11) attached to the crank case (5) to constitute an outermost portion of the crank case (5) in width direction of the vehicle, said second side cover lid (11) is exposed to the outside, and the cover means (9) comprises at least a second cover portion (9b) arranged under said second side cover lid (11), said second cover portion (9b) comprises a side section (9b1) that extends in a downward direction to cover the space under the crank case (5) and intersects the imaginary plan (P) that contains the road contact point (4a) of the front wheel (4) and outermost portions of the footrests (3a,3b) in width direction of the vehicle, wherein
the first side cover lid (8) and the second side cover lid (11) are exposed to opposing outside of the vehicle and constitutes outermost portions of the crank case (5) in width direction of the vehicle, and
the cover means (9) comprises a third cover portion (9c) arranged in width direction of the vehicle and connecting the first and second cover portions (9a, 9b), said third cover portion (9c) intersects the imaginary plan (P) that contains the road contact point (4a) of the front wheel (4) and outermost portions of the footrests (3a,3b) in width direction of the vehicle, front end sections (9a2, 9b2) of the first and second cover portions (9a, 9b) are extending further forward of the vehicle than a central section (9c1) of said third cover portion (9c), **characterised in that** the three cover means (9a, 9b, 9c) are provided as separate elements, which in combination form the cover means (9).

2. Straddle type vehicle with a single cylinder engine according to claim 1, wherein said first cover portion (9a) comprises an outermost portion in width direction of the vehicle and said outermost portion of the first cover portion (9a) is provided further outward from said first side cover lid (8) in width direction of the vehicle, preferably said outermost portion of the first cover portion (9a) is arranged at said first side section (9a1) arranged under said first side cover lid (8).

3. Straddle type vehicle with a single cylinder engine according to claim 2, wherein the pair of footrests (3a,3b) comprises a first footrest (3a) on the same side as the first cover portion (9a), the outermost portion of the first cover portion (9a) is provided further inward from the outermost portion of the first footrest (3a).

4. Straddle type vehicle with a single cylinder engine according to at least one of the claims 1 to 3, wherein a clutch mechanism is arranged within a clutch case and connected with the crank mechanism, said first side cover lid (8) is attached to the clutch case and covers the clutch mechanism, said clutch case is attached to a crank case portion or integral with the crank case.

5. Straddle type vehicle with a single cylinder engine according to at least one of the claims 1 to 4, wherein said second cover portion (9b) comprises an outermost portion in width direction of the vehicle and said outermost portion of the second cover portion (9b) is provided further outward from said second side cover lid (11) in width direction of the vehicle, preferably said outermost portion of the second cover portion (9b) is arranged at said second side section (9b1) arranged under said second side cover lid (11).

6. Straddle type vehicle with a single cylinder engine according to claim 5, wherein the pair of footrests (3a,3b) comprises a second footrest (3b) on the same side as the second cover portion (9b), the outermost portion of the second cover portion (9a) is provided further inward from the outermost portion of the second footrest (3a).

7. Straddle type vehicle with a single cylinder engine according to at least one of the claims 1 to 6, wherein a generator mechanism is arranged within a generator case and connected with the with the crank mechanism, said second side cover lid (11) is attached to the generator case and covers said generator mechanism, said generator case is attached to a crank case portion or integral with the crank case.

8. Straddle type vehicle with a single cylinder engine according to at least one of the claims 1 to 7, wherein the first to third cover portions (9a, 9b, 9c) are parts of an air/water guide means that is adapted to guide air/water splashed from the front wheel (4).

9. Straddle type vehicle with a single cylinder engine according to at least one of the claims 1 to 8, wherein said third cover portion (9c) comprises a front opening (12) that faces the front wheel (4) and intersects the imaginary plan (P) that contains the road contact point (4a) of the front wheel (4) and outermost portions of the footrests (3a,3b) in width direction of the vehicle.

10. Straddle type vehicle with a single cylinder engine according to claim 9, wherein said imaginary plan (P) that contains the road contact point (4a) of the front wheel (4) and outermost portions of the footrests (3a,3b) in width direction of the vehicle intersects the front opening (12) at a lower part thereof.

11. Straddle type vehicle with a single cylinder engine according to claim 9 or 10, wherein said front opening (12) is a further part of the air/water guide means, said air/water guide means is adapted to guide air/water splashed from the front wheel (4) toward the area of the footrests (3a,3b) to said space under the crank case (5).

12. Straddle type vehicle with a single cylinder engine according to at least one of the claims 1 to 11, wherein said vehicle comprises an exhaust pipe means arranged to extend from the engine (1) through the space under the crank case (5) to the rear of the vehicle,
the side section (9a1) of first cover portion (9a) extends in downward direction to a lowest end that is located lower than an exhaust pipe of the exhaust pipe means that is arranged under the crank case (5).

## Patentansprüche

1. Spreiz-Sitz-Typ-Fahrzeug mit einem Ein-Zylinder-Motor (1), fixiert an einem Fahrzeug-Rahmen (10), einem Sitz (2) für einen Fahrer, gelagert an dem Fahrzeug-Rahmen, ein Paar von Fuß-Rasten (3a, 3b) für den Fahrer, angebracht an dem Fahrzeug-Rahmen (10), und zumindest ein Vorder-Rad (4),
dieser Ein-Zylinder-Motor (1) umfasst:
ein Kurbel-Gehäuse (5), das einen Kurbel-Mechanismus aufnimmt,
einen Zylinder-Block (6), der eine Ein-Zylinder-Bohrung hat, die einen Kolben, verbunden mit dem Kurbel-Mechanismus, aufnimmt,
einen Zylinder-Kopf (7), angeordnet an einem Oben-Ende von dem Zylinder-Block (6), und ein Boden-Ende von dem Zylinder-Block (6) ist an einem oberen Teil von dem Kurbel-Gehäuse (5) angeordnet, dieser Zylinder-Block (6) und/oder dieser Zylinder-Kopf (7) sind zumindest teilweise zu der Außen-Seite von dem Fahrzeug freigelegt, wobei
das Kurbel-Gehäuse (5) einen ersten Seiten-Abdeckungs-Deckel (8) umfasst, der an dem Kurbel-Gehäuse (5) angebracht ist, um einen am weitesten außenliegenden Abschnitt von dem Kurbel-Gehäuse (5) in der Breiten-Richtung von dem Fahrzeug zu bilden, dieser erste Seiten-Abdeckungs-Deckel (8) ist zu der Außen-Seite freigelegt,
wobei eine Abdeckungs-Einrichtung (9) zumindest einen ersten Abdeckungs-Abschnitt (9a), angeordnet unter diesem ersten Seiten-Abdeckungs-Deckel (8), umfasst, dieser erste Abdeckungs-Abschnitt (9a) umfasst einen Seiten-Abschnitt (9a1), der sich in eine Richtung nach unten erstreckt, um einen Raum unter dem Kurbel-Gehäuse (5) abzudecken und eine imaginäre Ebene (P) schneidet, die einen Straßen-Kontakt-Punkt (4a) von dem Vorder-Rad (4) und am weitesten außenliegende Abschnitte von den Fuß-Rasten (3a, 3b) in der Breiten-Richtung von dem Fahrzeug beinhaltet, und
das Kurbel-Gehäuse (5) umfasst einen zweiten Seiten-Abdeckungs-Deckel (11), angebracht an dem Kurbel-Gehäuse (5), um einen am weitesten außenliegenden Abschnitt von dem Kurbel-Gehäuse (5) in Breiten-Richtung von dem Fahrzeug zu bilden, dieser zweite Seiten-Abdeckungs-Deckel (11) ist zu der Außen-Seite freigelegt, und die Abdeckungs-Einrichtung (9) umfasst zumindest einen zweiten Abdeckungs-Abschnitt (9b), der unter diesem zweiten Seiten-Abdeckungs-Deckel (11) angeordnet ist, dieser zweite Abdeckungs-Abschnitt (9b) umfasst einen Seiten-Abschnitt (9b1), der sich in eine Richtung nach unten erstreckt, um den Raum unter dem Kurbel-Gehäuse (5) abzudecken, und schneidet die imaginäre Ebene (P), die den Straßen-Kontakt-Punkt (4a) von dem Vorder-Rad (4) und am weitesten außenliegende Abschnitte von den Fuß-Rasten (3a, 3b) in Breiten-Richtung von dem Fahrzeug beinhaltet, wobei
der erste Seiten-Abdeckungs-Deckel (8) und der zweite Seiten-Abdeckungs-Deckel (11) zu gegenüberliegenden Außen-Seiten von dem Fahrzeug freiliegen und am weitesten außenliegende Abschnitte von dem Kurbel-Gehäuse (5) in Breiten-Richtung von dem Fahrzeug bilden, und
die Abdeckungs-Einrichtung (9) umfasst einen dritten Abdeckungs-Abschnitt (9c), der in der Breiten-Richtung von dem Fahrzeug angeordnet ist und die ersten und zweiten Abdeckungs-Abschnitte (9a, 9b) verbindet, dieser dritte Abdeckungs-Abschnitt (9c) schneidet die imaginäre Ebene, die den Straßen-Kontakt-Punkt (4a) von dem Vorder-Rad (4) und am weitesten außenliegende Abschnitte von den Fuß-Rasten (3a, 3b) in Breiten-Richtung von dem Fahrzeug beinhaltet, Vorder-End-Abschnitte (9a2, 9b2) von den ersten und zweiten Abdeckungs-Abschnitten (9a, 9b) erstrecken sich weiter nach vorne von dem Fahrzeug als ein Zentral-Abschnitt (9c1) von diesem dritten Abdeckungs-Abschnitt (9c), **dadurch gekennzeichnet, dass** die drei Abdeckungs-Einrichtungen (9a, 9b, 9c) als getrennte Elemente vorgesehen sind, die in Kombination die Abdeckungs-Einrichtung (9) ausbilden.

2. Spreiz-Sitz-Typ-Fahrzeug mit Ein-Zylinder-Motor gemäß Anspruch 1, wobei dieser erste Abdeckungs-Abschnitt (9a) einen am weitesten außenliegenden Abschnitt in Breiten-Richtung von dem Fahrzeug umfasst, und dieser am weitesten außenliegende Abschnitt von dem ersten Abdeckungs-Abschnitt (9a) ist weiter außen vorgesehen von diesem ersten Seiten-Abdeckungs-Deckel (8) in Breiten-Richtung von dem Fahrzeug, vorzugsweise ist dieser am weitesten außenliegende Abschnitt von dem ersten Abdeckungs-Abschnitt (9a) an diesem ersten Seiten-Abschnitt (9a1), der unter diesem ersten Seiten-Abdeckungs-Deckel (8) angeordnet ist, angeordnet.

3. Spreiz-Sitz-Typ-Fahrzeug mit Ein-Zylinder-Motor gemäß Anspruch 2, wobei das Paar von Fuß-Rasten (3a, 3b) eine erste Fuß-Raste (3a) an derselben Seite wie der erste Abdeckungs-Abschnitt (9a) umfasst, der am weitesten außenliegende Abschnitt von dem ersten Abdeckungs-Abschnitt (9a) ist weiter innen von dem am weitesten außenliegenden Abschnitt von der ersten Fuß-Raste (3a) vorgesehen.

4. Spreiz-Sitz-Typ-Fahrzeug mit Ein-Zylinder-Motor gemäß zumindest einem der Ansprüche 1 bis 3, wobei ein Kupplungs-Mechanismus mit einem Kupplungs-Gehäuse angeordnet, und mit dem Kurbel-Mechanismus verbunden ist, dieser erste Seiten-Abdeckungs-Deckel (8) ist an dem Kupplungs-Gehäuse angebracht und deckt den Kupplungs-Mechanismus ab, dieses Kupplungs-Gehäuse ist an einem Kurbel-Gehäuse-Abschnitt angebracht oder mit dem Kurbel-Gehäuse integral.

5. Spreiz-Sitz-Typ-Fahrzeug mit Ein-Zylinder-Motor gemäß zumindest einem der Ansprüche 1 bis 4, wobei dieser zweite Abdeckungs-Abschnitt (9b) einen am weitesten außenliegenden Abschnitt in Breiten-Richtung von dem Fahrzeug umfasst, und dieser am weitesten außenliegende Abschnitt von dem zweiten Abdeckungs-Abschnitt (9b) weiter außen von diesem zweiten Seiten-Abdeckungs-Deckel (11) in Breiten-Richtung von dem Fahrzeug vorgesehen ist, vorzugsweise ist dieser am weitesten außenliegende Abschnitt von dem zweiten Abdeckungs-Abschnitt (9b) an diesem zweiten Seiten-Abschnitt (9b1), der unter diesem zweiten Abdeckungsdeckel (11) angeordnet ist, angeordnet.

6. Spreiz-Sitz-Typ-Fahrzeug mit Ein-Zylinder-Motor gemäß Anspruch 5, wobei das Paar von Fuß-Rasten (3a, 3b) eine zweite Fuß-Raste (3b) an derselben Seite wie der zweite Abdeckungs-Abschnitt (9b) umfasst, der am weitesten außenliegende Abschnitt von dem zweiten Abdeckungs-Abschnitt (9a) ist weiter innen von dem am weitesten außenliegenden Abschnitt von der zweiten Fuß-Raste (3a) vorgesehen.

7. Spreiz-Sitz-Typ-Fahrzeug mit Ein-Zylinder-Motor gemäß zumindest einem der Ansprüche 1 bis 6, wobei ein Generator-Mechanismus in einem Generator-Gehäuse angeordnet, und mit dem Kurbel-Mechanismus verbunden ist, dieser zweite Seiten-Abdeckungs-Deckel (11) ist an dem Generator-Gehäuse angebracht und deckt diesen Generator-Mechanismus ab, dieses Generator-Gehäuse ist an einem Kurbel-Gehäuse-Abschnitt angebracht oder mit dem Kurbel-Gehäuse integral.

8. Spreiz-Sitz-Typ-Fahrzeug mit Ein-Zylinder-Motor gemäß zumindest einem der Ansprüche 1 bis 7, wobei die ersten bis dritten Abdeckungs-Abschnitte (9a, 9b, 9c) Teile von einer Luft/Wasser-Führungs-Einrichtung sind, die angepasst ist, um Luft/Wasser aufgespritzt von dem Vorder-Rad (4) zu führen.

9. Spreiz-Sitz-Typ-Fahrzeug mit Ein-Zylinder-Motor gemäß zumindest einem der Ansprüche 1 bis 8, wobei dieser dritte Abdeckungs-Abschnitt (9c) eine Front-Öffnung (12) umfasst, die dem Vorder-Rad (4) zugewandt ist, und die imaginäre Ebene (P) schneidet, die den Straßen-Kontakt-Punkt (4a) von dem Vorder-Rad (4) und am weitesten außenliegende Abschnitte von den Fuß-Rasten (3a, 3b) in Breiten-Richtung von dem Fahrzeug beinhaltet.

10. Spreiz-Sitz-Typ-Fahrzeug mit Ein-Zylinder-Motor gemäß Anspruch 9, wobei diese imaginäre Ebene (P), die den Straßen-Kontakt-Punkt (4a) von dem Vorder-Rad (4) und die am weitesten außenliegenden Abschnitte von den Fuß-Rasten (3a, 3b) in Breiten-Richtung von dem Fahrzeug beinhaltet, schneidet die Front-Öffnung (12) an einem unteren Teil derselben.

11. Spreiz-Sitz-Typ-Fahrzeug mit einem Ein-Zylinder-Motor gemäß zu Anspruch 9 oder 10, wobei diese Front-Öffnung (12) ein weiterer Teil von der Luft/Wasser-Führungs-Einrichtung ist, diese Luft/Wasser-Führungs-Einrichtung ist angepasst, um Luft/Wasser von dem Vorder-Rad (4) zu dem Bereich von den Fuß-Rasten (3a, 3b) hochgespritzt, zu diesem Raum unter dem Kurbel-Gehäuse (5) zu führen.

12. Spreiz-Sitz-Typ-Fahrzeug mit Ein-Zylinder-Motor gemäß zumindest einem der Ansprüche 1 bis 11, wobei dieses Fahrzeug eine Abgas-Leitungs-Einrichtung umfasst, die angeordnet ist, sich von dem Motor (1) durch den Raum unter dem Kurbel-Gehäuse (5) nach hinten von dem Fahrzeug zu erstrecken,
der Seiten-Abschnitt (9a1) von dem ersten Abdeckungs-Abschnitt (9a) erstreckt sich in eine Richtung nach unten zu einem untersten Ende, das niedriger angeordnet ist als eine Abgas-Leitung von der Abgas-Leitungs-Einrichtung, die unter dem Kurbel-Gehäuse (5) angeordnet ist.

## Revendications

1. Véhicule de type à selle avec un moteur monocylindre (1) fixé à un cadre de véhicule (10), un siège (2) pour un conducteur soutenu sur le cadre de véhicule, une paire de repose-pieds (3a, 3b) pour le conducteur rattachés au cadre du véhicule (10) et au moins une roue avant (4), ledit moteur monocylindre (1) comprend :
un carter de vilebrequin (5) accueillant un mécanisme de vilebrequin,
un bloc de cylindre (6) présentant un alésage de cylindre unique accueillant un piston connecté au mécanisme de vilebrequin,
une culasse (7) disposée sur une extrémité sommitale du bloc de cylindre (6), et une extrémité de fond du bloc de cylindre (6) est disposée sur une partie supérieure du carter de vilebrequin (5), ledit bloc de cylindre (6) et/ou ladite culasse (7) sont au moins partiellement exposés à l'extérieur du véhicule, dans lequel
le carter de vilebrequin (5) comprend un couvercle capot de premier côté (8) rattaché au carter de vilebrequin (5) pour constituer la partie la plus à l'extérieure du carter de vilebrequin (5) dans une direction de largeur du véhicule, ledit couvercle capot de premier côté (8) est exposé à l'extérieur, dans lequel un moyen de capot (9) comprend au moins une première partie de capot (9a) disposée sous ledit premier couvercle capot de premier côté (8), ladite première partie de capot (9a) comprend une section latérale (9a1) qui s'étend dans une direction vers le bas pour couvrir un espace sous le carter de vilebrequin (5) et coupe un plan imaginaire (P) qui contient un point de contact avec la route (4a) de la roue avant (4) et des parties les plus à l'extérieur des repose-pieds (3a, 3b) dans une direction de largeur du véhicule, et
le carter de vilebrequin (5) comprend un couvercle capot de deuxième côté (11) rattaché au carter de vilebrequin (5) pour constituer la partie la plus à l'extérieure du carter de vilebrequin (5) dans une direction de largeur du véhicule, ledit couvercle capot de deuxième côté (11) est exposé à l'extérieur, et le moyen de capot (9) comprend au moins une deuxième partie de capot (9b) disposée sous ledit couvercle capot de deuxième côté (11), ladite deuxième partie de capot (9b) comprend une section latérale (9b1) qui s'étend dans une direction vers le bas pour couvrir un espace sous le carter de vilebrequin (5) et coupe le plan imaginaire (P) qui contient le point de contact avec la route (4a) de la roue avant (4) et des parties les plus à l'extérieur des repose-pieds (3a, 3b) dans une direction de largeur du véhicule, dans lequel
le couvercle capot de premier côté (8) et le couvercle capot de deuxième côté (11) sont exposés à des extérieurs opposés du véhicule et constituent les parties les plus extérieures du carter de vilebrequin (5) dans une direction de largeur du véhicule, et
le moyen de capot (9) comprend une troisième partie de capot (9c) disposé dans une direction de largeur du véhicule et connectant les première et deuxième parties de capot (9a, 9b), ladite troisième partie de capot (9c) coupe le plan imaginaire (P) qui contient le point de contact avec la route (4a) de la roue avant (4) et des parties les plus à l'extérieur des repose-pieds (3a, 3b) dans une direction de largeur du véhicule, des sections d'extrémité avant (9a2, 9b2) des première et deuxième parties de capot (9a, 9b) s'étendent plus avant du véhicule qu'une section centrale (9c1) de ladite troisième partie de capot (9c), **caractérisé en ce que** les trois moyens de capot (9a, 9b, 9c) sont disposés en tant qu'éléments séparés, qui combinés constituent le moyen de capot (9).

2. Le véhicule de type à selle avec un moteur monocylindre selon la revendication 1, dans lequel ladite première partie de capot (9a) comprend une partie la plus à l'extérieur dans une direction de largeur du véhicule et ladite partie la plus à l'extérieur de la première partie de capot (9a) est disposée plus avant vers l'extérieur depuis ledit couvercle capot de premier côté (8) dans une direction de largeur du véhicule, de préférence ladite partie la plus à l'extérieur de la première partie de capot (9a) est disposée sur ladite première section latérale (9a1) disposée sous ledit premier couvercle capot de premier côté (8).

3. Le véhicule de type à selle avec un moteur monocylindre selon la revendication 2, dans lequel la paire de repose-pieds (3a, 3b) comprend un premier repose-pied (3a) sur le même côté que la première partie de capot (9a), la partie la plus à l'extérieur de la première partie de capot (9a) est disposée plus avant vers l'intérieur depuis la partie la plus à l'extérieur du premier repose-pied (3a) .

4. Le véhicule de type à selle avec un moteur monocylindre selon au moins l'une des revendications 1 à 3, dans lequel un mécanisme d'embrayage est installé au sein d'un carter d'embrayage et connecté au mécanisme de vilebrequin, ledit couvercle capot de premier côté (8) est rattaché au carter d'embrayage et couvre le mécanisme d'embrayage, ledit carter d'embrayage est rattaché à une partie de carter de vilebrequin ou intégré au carter de vilebrequin.

5. Le véhicule de type à selle avec un moteur monocylindre selon au moins une des revendications 1 à 4, dans lequel ladite deuxième partie de capot (9b) comprend une partie la plus à l'extérieur dans une direction de largeur du véhicule et ladite partie la plus à l'extérieur de la deuxième partie de capot (9b) est disposée plus avant vers l'extérieur depuis ledit couvercle capot de deuxième côté (11) dans une direction de largeur du véhicule, de préférence ladite partie la plus à l'extérieur de la deuxième partie de capot (9b) est disposée sur ladite deuxième section latérale (9b1) disposée sous ledit premier couvercle capot de deuxième côté (11).

6. Le véhicule de type à selle avec un moteur monocylindre selon la revendication 5, dans lequel la paire de repose-pieds (3a, 3b) comprend un deuxième repose-pied (3b) sur le même côté que la deuxième partie de capot (9b), la partie la plus à l'extérieur de la deuxième partie de capot (9a) est disposée plus avant vers l'intérieur depuis la partie la plus à l'extérieur du deuxième repose-pied (3a) .

7. Le véhicule de type à selle avec un moteur monocylindre selon au moins l'une des revendications 1 à 6, dans lequel un mécanisme de générateur est installé au sein d'un carter de générateur et connecté au mécanisme de vilebrequin, ledit couvercle capot de deuxième côté (11) est rattaché au carter de générateur et couvre ledit mécanisme de générateur, ledit carter de générateur est rattaché à une partie de carter de vilebrequin ou intégré au carter de vilebrequin.

8. Le véhicule de type à selle avec un moteur monocylindre selon au moins l'une des revendications 1 à 7, dans lequel les première à troisième parties de capot (9a, 9b, 9c) sont des parties d'un moyen de guidage d'air/eau qui est adapté pour guider de l'air/eau projeté(e) depuis la roue avant (4).

9. Le véhicule de type à selle avec un moteur monocylindre selon au moins l'une des revendications 1 à 8, dans lequel ladite troisième partie de capot (9c) comprend une ouverture avant (12) qui est orientée vers la roue avant (4) et coupe le plan imaginaire (P) qui contient le point de contact avec la route (4a) de la roue avant (4) et des parties les plus extérieures des repose-pieds (3a, 3b) dans une direction de largeur du véhicule.

10. Le véhicule de type à selle avec un moteur monocylindre selon la revendication 9, dans lequel ledit plan imaginaire (P) qui contient le point de contact avec la route (4a) de la roue avant (4) et des parties les plus à l'extérieur des repose-pieds (3a, 3b) dans une direction de largeur du véhicule coupe l'ouverture avant (12) sur une partie inférieure de celle-ci.

11. Le véhicule de type à selle avec un moteur monocylindre selon la revendication 9 ou 10, dans lequel ladite ouverture avant (12) est une partie plus avant du moyen de guidage d'air/eau, ledit moyen de guidage d'air/eau est adapté pour guider de l'air/eau projeté(e) depuis la roue avant (4) vers la zone des repose-pieds (3a, 3b) sur ledit espace sous le carter de vilebrequin (5) .

12. Le véhicule de type à selle avec un moteur monocylindre selon au moins l'une des revendications 1 à 11, dans lequel ledit véhicule comprend un moyen de conduit d'échappement disposé pour s'étendre depuis le moteur (1) à travers l'espace sous le boîtier de vilebrequin (5) à l'arrière du véhicule,
la section latérale (9al) de première partie de capot (9a) s'étend dans une direction vers le bas à une extrémité la plus basse qui est située plus bas qu'un conduit d'échappement du moyen de conduit d'échappement qui est disposé sous le carter de vilebrequin (5).
